# EUROPEAN PATENT SPECIFICATION

(11) **EP 3 586 623 B1**
(45) Date of publication and mention of the grant of the patent: **11.11.2020**
(21) Application number: 19183360.7
(22) Date of filing: 28.06.2019
(51) Int. Cl.: A01L 13/00, A01K 15/00, A61D 3/00

(54) **CLAW TRIMMING BOX**
VIEHKLAUENPFLEGESTAND
CAGE DE CONTENTION POUR PARAGE DU PIED D'ANIMAUX

(30) Priority: 29.06.2018 NL 2021214
(43) Date of publication of application: 01.01.2020
(73) Proprietor: Wopa Constructiebedrijf B.V., 7135 JV Harreveld (NL)
(72) Inventor: Wopereis, Johannes Wilhelmus Antonius, 7135 JV Harreveld (NL)
(74) Representative: V.O.

(56) References cited:
- EP-A1- 2 522 220
- EP-A1- 2 656 730
- EP-A1- 3 093 190
- DE-U1- 29 713 038

## Description

### FIELD

The invention relates to a claw trimming box for treating a leg of a hoofed animal, in particular a cow.

### BACKGROUND

Claw trimming boxes for treating hoofed animals such as cows are known from, for example, EP 2.656.730. This box is provided with a frame which bounds an animal set-up space. On a rear side the animal set-up space is provided with an entrance opening, through which an animal to be treated is guided into the animal set-up space. The animal set-up space forms a passage which is provided at the front side with an exit opening to bring the animal out of the animal set-up space after treatment. The claw trimming box is mobile so that it can be displaced when it is not in use. The claw trimming box can thus be used on any flat supporting surface or ground.

To allow the hoofed animals that are to be treated, in particular cows, to enter or exit the animal set-up space as easily as possible, the bottom of the animal set-up space is preferably as close to the ground as possible. In this way, the animal only needs to step up or step down a lowest possible threshold. By contrast, for the user of the claw trimming box, that is, the person treating the hoofed animals, it is desirable to have the bottom with the hoofed animal to be treated thereon at some distance from the ground, so that he or she has better access to the claws to be treated. To bridge this difference in height, it is already known from EP 2.522.220 to bring the claw trimming box, having therein the hoofed animal to be treated, from a walk-in position to a work position at working height by means of a lift system.

### SUMMARY

In order to be able to carry the weight of the claw trimming box with the hoofed animal in it, a lift system for the vertical displacement thereof needs to be of robust design. To this end, the invention provides a claw trimming box according to claim 1. More particularly, the invention provides a claw trimming box for treating a leg of a hoofed animal, in particular a cow. The claw trimming box comprises a box frame provided with four standards which extend in vertical direction from four angular points of a rectangle with two long sides and two short sides. The box frame bounds an animal set-up space. The box frame has an entrance opening at one of the short sides and an exit opening at another one of the short sides. The claw trimming box further comprises a floor which is connected with the box frame, a mobile undercarriage frame, and a lift system which connects the undercarriage frame with the box frame. The lift system is configured for vertically displacing the box frame with the floor relative to the undercarriage frame, such that the floor is bringable into a walk-in position and into a higher-located work position. The lift system comprises two first linear actuators vertically placed near the two angular points of a first one of the short sides, and two second linear actuators vertically placed near the two angular points of a second one of the short sides. A first end of each first linear actuator is connected with the undercarriage frame and a second end of each first linear actuator is connected with the box frame. One of these connections of each first linear actuator is a hinged connection. A first end of each second linear actuator is connected with the undercarriage frame and a second end of each second linear actuator is connected with the box frame. One of these connections of each second linear actuator is a hinged and substantially horizontally slidable connection.

The linear actuators provide for the vertical displacement of the box frame relative to the undercarriage frame and thereby also relative to the ground. Through the strategic placement of the various linear actuators, a stable and robust lift system can be made. The weight of the box frame with hoofed animal is distributed over the linear actuators so that solely vertical forces act on the linear actuators. A lift system with four linear actuators at the angular points provides the desired stability with as few linear actuators as possible. A lift system with fewer than four linear actuators is less stable. More than four linear actuators are not needed for the stability and because of the costs of a linear actuator are not desirable either. The advantage of the use of hinged and slidable connections of the first and second linear actuators to the box frame and/or undercarriage frame is that a degree of freedom in the movement of the linear actuators is built in. Both a hinge axis of the hinged connection and a movement direction of the slidable connection are preferably horizontal. The built-in degrees of freedom are then perpendicular to the normal direction of action of the linear actuators. If all linear actuators work as they should, these degrees of freedom have no effect. They do have an effect if one of the linear actuators fails. Since each construction is subject to wear, a good, robust construction takes such failure of a linear actuator into account. Should one of the linear actuators fail, that linear actuator's weight to be carried is distributed over the remaining linear actuators. In addition, the box frame will tend to heel over to the side of the linear actuator having failed. As a result of this, in addition to a greater vertical force, also a horizontal force is going to act on the remaining linear actuators. For a linear actuator that is designed to carry vertical loads, a horizontal force component adversely affects the life span. There is a reasonable chance of deformation of the linear actuators, as a result of which they work less well, or stop working altogether and have to be replaced. This entails the necessary costs. By incorporation of degrees of freedom, the horizontal force components are absorbed in that the linear actuator can move along in that direction. Deformation will then be less, or no deformation will occur.

Further elaborations of the invention are described in the subclaims and will be clarified hereinafter on the basis of examples, with reference to the drawing figures.

### BRIEF DESCRIPTION OF THE FIGURES

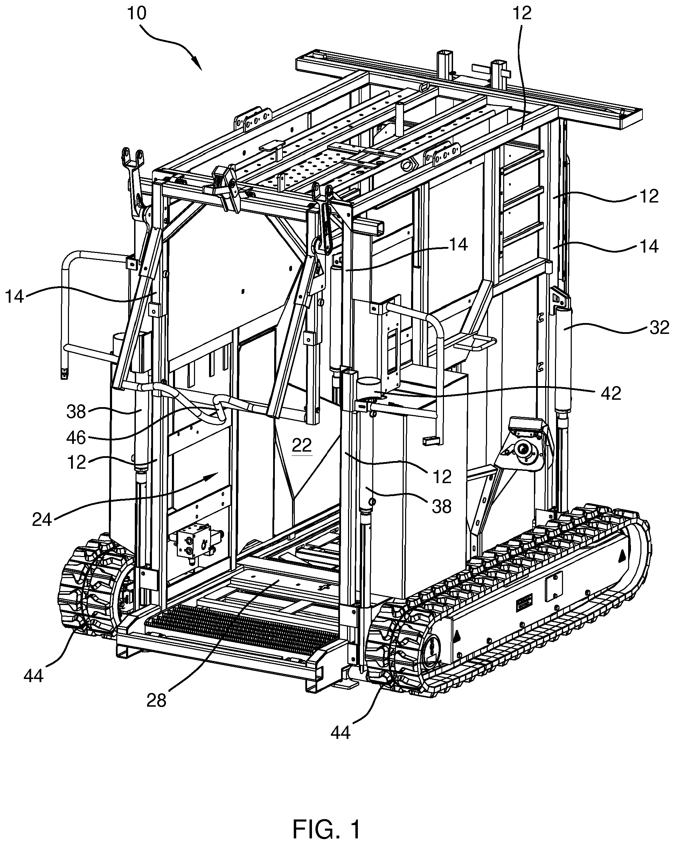

Figure 1 shows a perspective rear / side view of an example of a claw trimming box in a low position, hereinafter walk-in position;

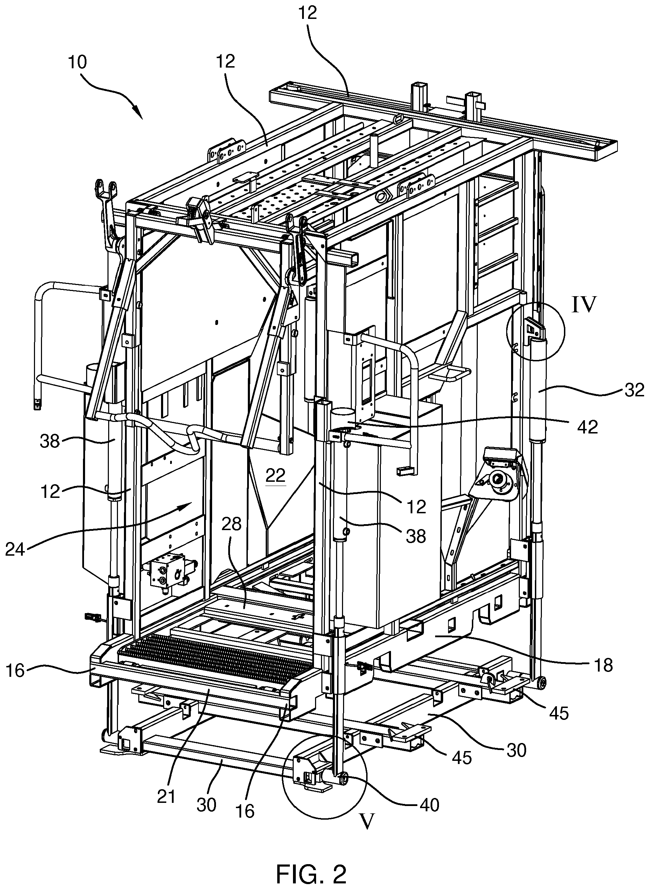

Figure 2 shows the example of Figure 1 in a higher-located work position, with omission of the caterpillar tracks;

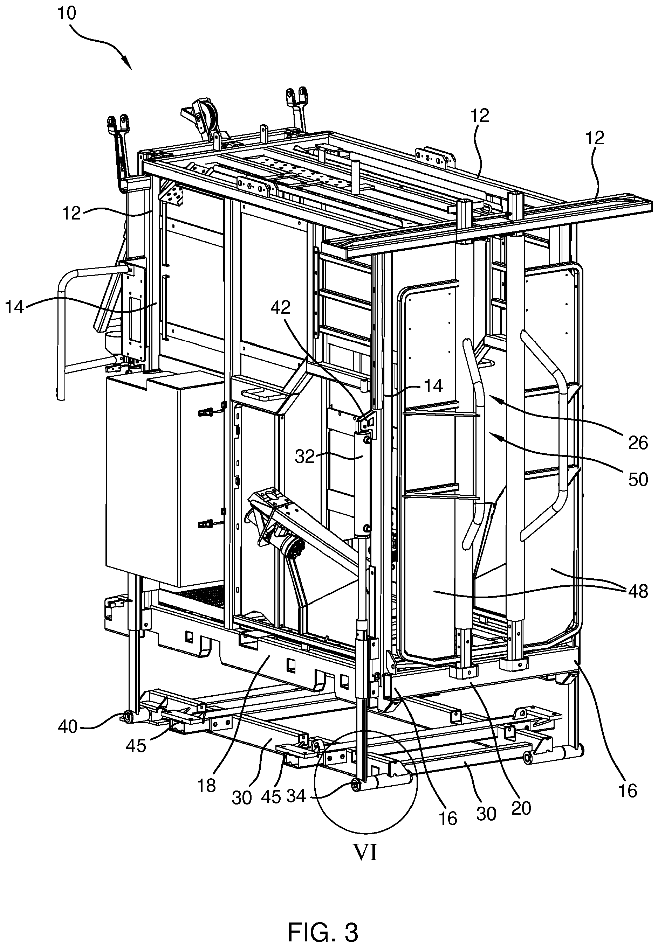

Figure 3 shows a perspective front / side view of the example of Figures 1 and 2, with omission of the caterpillar tracks;
Figure 4 shows a perspective view of detail IV in Figure 2;
Figure 5 shows a perspective view of detail V in Figure 2;

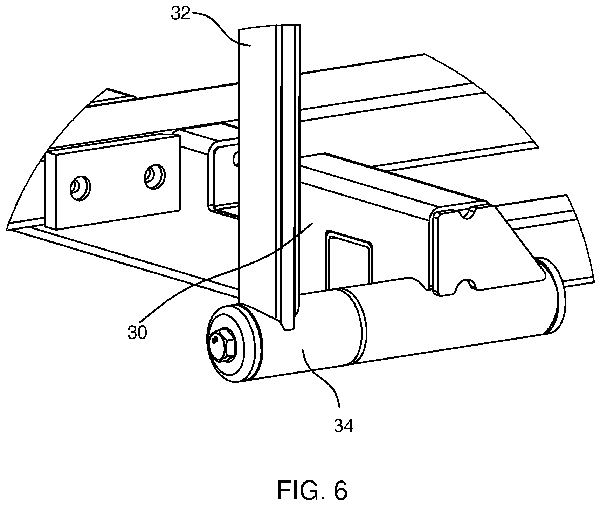

Figure 6 shows a perspective view of detail VI in Figure 3.

### DETAILED DESCRIPTION

In the following detailed description, with the aid of reference numerals, reference is made to the example that is represented in the figures. The embodiments that are described in the detailed description, however, are not limited to the example that is shown in the figures but may also be implemented in a different manner than shown in the example. The embodiments described in the detailed description should therefore be read and understood also without the reference numerals. The various embodiments to be described hereinafter can be applied in combination with each other or independently of each other.

Most generally, the invention provides a claw trimming box 10 for treating a leg of a hoofed animal, in particular a cow. The claw trimming box 10 comprises a box frame 12 provided with four standards 14 which extend in vertical direction from four angular points 16 of a rectangle with two long sides 18 and two short sides 20, 21. The box frame 12 bounds an animal set-up space 22. The box frame 12 has an entrance opening 24 at one of the short sides 20, 21 and has an exit opening 26 at another one of the short sides. The claw trimming box is further provided with a floor 28 which is connected with the box frame 12, a mobile undercarriage frame 30, and a lift system which connects the undercarriage frame 30 with the box frame 12. The lift system is configured for vertically displacing the box frame 12 with the floor 28 relative to the undercarriage frame 30, such that the floor 28 is bringable into a walk-in position and into a higher-located work position. The lift system comprises two first linear actuators 32 vertically placed near the two angular points 16 of a first one of the short sides 20, 21 and two second linear actuators 38 vertically placed near the two angular points 16 of a second one of the short sides 20, 21. A first end 34 of each first linear actuator 32 is connected with the undercarriage frame 30 and a second end 36 of each first linear actuator 32 is connected with the box frame 12. One of these connections of each first linear actuator 32 is a hinged connection. A first end 40 of each second linear actuator 38 is connected with the undercarriage frame 30, and a second end 42 of each second linear actuator 38 is connected with the box frame 12. One of these connections of each second linear actuator 38 is a hinged and substantially horizontally slidable connection.

The effects and advantages of the claw trimming box 10 have been described in the summary and these effects and advantages are inserted here by reference.

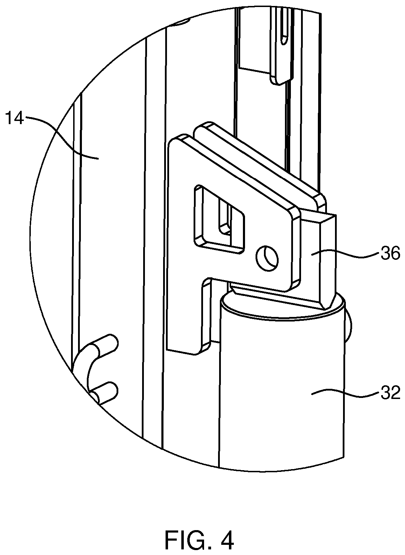

In the example in the drawings, the first ends 34, 40 of the first and the second linear actuators 32, 38 are hingedly connected with the undercarriage frame 30. The first ends 40 of the second linear actuators 38 are moreover slidably connected with the undercarriage frame 30. The second ends 36, 42 of the linear actuators 32, 38 are fixedly connected with the standards 14 of the box frame 12. In Figure 4 the connection of the second end 36 of one of the two first linear actuators 32 with a standard 14 of the box frame 12 can be seen in detail. A corresponding connection is between the second end 36 of another one of the two first linear actuators 32 with a standard 14 of the box frame 12 and between the second ends 42 of each of the second linear actuators 38 and standards 14 of the box frame 12.

Given a mobile claw trimming box 10 with a rectangular profile, a direction of travel may be parallel to the long sides 18. This has as an advantage that a width of the claw trimming box 10, perpendicular to the direction of travel, is the most compact, and the claw trimming box 10 thus fits through narrow openings better.

In an embodiment of the invention, each hinged connection can be hingeable around a hinge axis which is parallel to the two short sides 20, 21. The hinged and substantially horizontally slidable connections are preferably slidable in a direction substantially parallel to the two long sides 18.

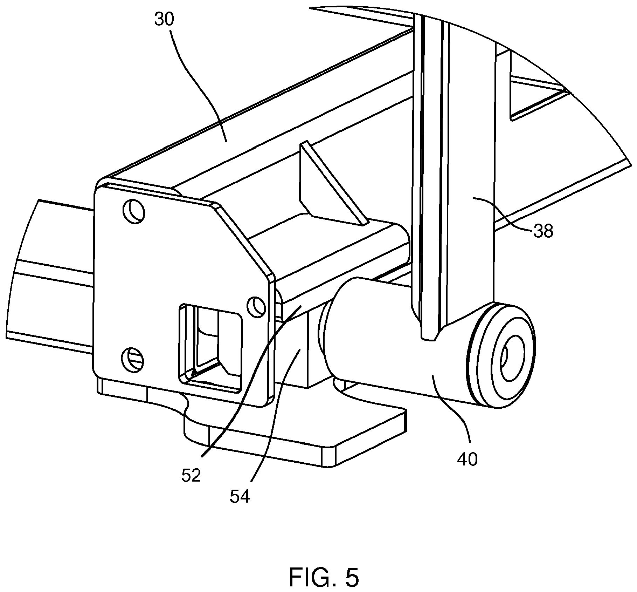

The slidable connection can be, for example, a sliding block 54 slidably received in a guide 52, which is clearly shown in Figure 5. In the example shown in Figure 5, the slidable connection is also hingeable around a hinge axis which is parallel to the two short sides 20.

The hinge axes of the first and the second linear actuators 32, 38 are perpendicular to the direction of action of the first and the second linear actuators 32. If the hinge axes of the first and the second linear actuators 32, 38 are parallel to the short sides 20, 21, the two first linear actuators 32 can hinge towards the two second linear actuators 38 or away therefrom. Also, the two second linear actuators 38 can hinge towards the two first linear actuators 32 or away therefrom. If the direction of movement of the substantially horizontally slidable connection is parallel to the long sides 18, the two second linear actuators 38 can slide towards the two first linear actuators 32 or slide away therefrom. These directions of movement correspond to the direction of the horizontal force component that is exerted on a linear actuator 32, 38 after failure of another linear actuator 32, 38. In this manner, this horizontal force component is absorbed.

In an embodiment of the invention, the two first linear actuators 32 may be placed near the angular points 16 of a first short side 20. The box frame 12 can have the exit opening 26 at the first short side 20. The two second linear actuators 38 may be placed near the angular points 16 of a second short side 21. The box frame 12 can have the entrance opening 24 at the second short side 21.

Already known claw trimming boxes 10 with a vertical lift system have shown that linear actuators 32, 38 near the entrance opening 24 fail more often than linear actuators 32, 38 near the exit opening 26. Because, given an expected relatively lower failure near the exit opening 26, the linear actuators 32 near this exit opening 26 will be further away from the linear actuator 38 having failed, it is preferred to place the two first linear actuators 32 near the same first short side 20 as the exit opening 26. Because, given an expected relatively higher failure of linear actuators 38 near the entrance opening 24, the linear actuators 38 near this entrance opening 24 will be closer to the linear actuator 38 having failed, it is preferred to place the two second linear actuators 38 near the same second short side 21 as the entrance opening 24. Of course, it is also possible to place the two first linear actuators 32 near the angular points 16 of the second short side 21 where the box frame 12 has the entrance opening 24, and to place the two second linear actuators 38 near the angular points 16 of the first short side 20 where the box frame 12 has the exit opening 26.

In an embodiment of the invention, the undercarriage frame 30 may be provided with a caterpillar undercarriage 44. The advantage of the caterpillar undercarriage 44 over conventional wheels without caterpillar, is that the caterpillar undercarriage 44 provides a stable base when the claw trimming box 10 is standing still. The caterpillar undercarriage 44 gives a lower ground pressure with respect to conventional tyres, because the weight is distributed over the entire contact surface. In addition, the caterpillar undercarriage 44 provides high maneuverability and permits turning through 360°. The caterpillar undercarriage 44 can consist of two caterpillar beams with steel or rubber tracks, with a few transverse beams 45 therebetween. The undercarriage frame 30 can be mounted to these transverse beams 45. It is possible to provide the box frame 12 with recesses which in the walk-in position fittingly fall over the transverse beams 45 of the caterpillar undercarriage 44 in order to give the claw trimming box 10 in the walk-in position extra stability and to allow it to be brought into a lowest possible position. Instead of the caterpillar undercarriage 44, it is also possible to provide the undercarriage frame 30 with conventional wheels, for example, wheels with pneumatic tyres.

In an embodiment of the invention, the caterpillar undercarriage 44 can extend substantially throughout a length of the box frame 12 and/or the undercarriage frame 30. One of the advantages of the use of a caterpillar undercarriage 44 is that it provides a stable base when the claw trimming box 10 is standing still. The greater the length of the caterpillar undercarriage 44, the more stable this base will be. A length of the caterpillar undercarriage 44 that is greater than the length of the box frame 12 and/or the undercarriage frame 30 will entail diminished maneuverability of the claw trimming box 10 and is therefore not desirable.

In an embodiment of the invention, each linear actuator 32, 38 can comprise a hydraulic piston-cylinder assembly. A hydraulic piston-cylinder assembly is an effective way of exerting a linear force that is sufficiently large to carry the weight to be borne.

In an embodiment, of which an example is shown in the figures, the first end 34 of each first linear actuator 32 which is connected with the undercarriage frame 30 can be the hinged connection.

In an embodiment, of which an example is shown in the figures, the first end 40 of each second linear actuator 38 which is connected with the undercarriage frame 30 can be the hinged and slidable connection.

In an embodiment, of which an example is shown in the figures, the second end 36 of each first linear actuator 32 may be fixedly connected with the box frame 12. The second end 42 of each second linear actuator 38 may then be fixedly connected with the box frame 12.

In practical tests, it has been found that such an embodiment is robust and even in the event of failure of one of the linear actuators 32, 38 does not get damaged, while the hinged and slidable connections are at positions that are easily accessible and hence are simple to maintain.

The invention is not limited to the example shown in the figures. The above-described embodiments, as has already been indicated, may also be implemented differently than shown in the example of the figures. The scope of protection is defined by the appended claims in which the reference numerals have no limiting effect.

### KEY TO REFERENCE NUMERALS

- 10 -: claw trimming box
- 12 -: box frame
- 14 -: standards
- 16 -: angular point
- 18 -: long side
- 20 -: first short side
- 21 -: second short side
- 22 -: animal set-up space
- 24 -: entrance opening
- 26 -: exit opening
- 28 -: floor
- 30 -: undercarriage frame
- 32 -: first linear actuator
- 34 -: first end (of a first linear actuator)
- 36 -: second end (of a first linear actuator)
- 38 -: second linear actuators
- 40 -: first end (of a second linear actuator)
- 42 -: second end (of a second linear actuator)
- 44 -: caterpillar undercarriage
- 45 -: transverse beam
- 46 -: cross bar
- 48 -: door
- 50 -: head passage

## Claims

1. A claw trimming box (10) for treating a leg of a hoofed animal, in particular a cow, the claw trimming box (10) comprising:
• a box frame (12) provided with four standards (14) which extend in a vertical direction from four angular points (16) of a rectangle with two long sides (18) and two short sides (20, 21), wherein the box frame (12) bounds an animal set-up space (22), wherein the box frame (12) at one of the short sides (20, 21) has an entrance opening (24) and at another one of the short sides (20, 21) has an exit opening (26);
• a floor (28) which is connected with the box frame (12);
• a mobile undercarriage frame (30); and
• a lift system which connects the undercarriage frame (30) with the box frame (12) and which is configured for vertically displacing the box frame (12) with the floor (28) relative to the undercarriage frame (30), such that the floor (28) is bringable into a walk-in position and into a higher-located work position, **characterized by** the lift system comprising:
∘ two first linear actuators (32) vertically placed near the two angular points (16) of a first one of the short sides (20, 21), wherein a first end (34) of each first linear actuator (32) is connected with the undercarriage frame (30) and wherein a second end (36) of each first linear actuator (32) is connected with the box frame (12), wherein of each first linear actuator (32) one of these connections is a hinged connection, and
∘ two second linear actuators (38) vertically placed near the two angular points (16) of a second one of the short sides (20, 21), wherein a first end (40) of each second linear actuator (38) is connected with the undercarriage frame (30) and wherein a second end (42) of each second linear actuator (38) is connected with the box frame (12), wherein of each second linear actuator (38) one of these connections is a hinged and substantially horizontally slidable connection.

2. The claw trimming box according to claim 1, wherein each hinged connection hinges around a hinge axis which is parallel to the two short sides (20, 21).

3. The claw trimming box according to claims 1 or 2, wherein the hinged and substantially horizontally slidable connection is slidable in a direction substantially parallel to the two long sides (18).

4. The claw trimming box according to any one of the preceding claims, wherein the two first linear actuators (32) are placed near the angular points (16) of a first short side (20), wherein the box frame (12) has the exit opening (26) at the first short side (20), and wherein the two second linear actuators (38) are placed near the angular points (16) of a second short side (21), wherein the box frame (12) has the entrance opening (24) at the second short side (21).

5. The claw trimming box according to any one of the preceding claims, wherein the undercarriage frame (30) is provided with a caterpillar undercarriage (44).

6. The claw trimming box according to claim 5, wherein the caterpillar undercarriage (44) substantially extends throughout a length of the box frame (12) and/or the undercarriage frame (30).

7. The claw trimming box according to any one of the preceding claims, wherein each linear actuator (32, 38) comprises a hydraulic piston-cylinder assembly.

8. The claw trimming box according to any one of the preceding claims, wherein the entrance opening (24) is closable with a cross bar (46) which is connected with the box frame (12) in a manner adjustable upwards and downwards.

9. The claw trimming box according to any one of the preceding claims, wherein the exit opening (26) is closable with two displaceable doors (48).

10. The claw trimming box according to claim 9, wherein the two doors (48) are provided with a head passage (50) for passing the head and a portion of a neck of the animal to be treated that is in the animal set-up space (22).

11. The claw trimming box according to any one of the preceding claims, wherein the horizontally slidable connection of the second linear actuators (38) comprises a sliding block (54) slidably received in a guide (52).

12. The claw trimming box according to any one of the preceding claims, wherein the first end (34) of each first linear actuator (32) which is connected with the undercarriage frame (30) is the hinged connection.

13. The claw trimming box according to any one of the preceding claims, wherein the first end (40) of each second linear actuator (38) which is connected with the undercarriage frame (30) is the hinged and slidable connection.

14. The claw trimming box according to any one of the preceding claims, wherein the second end (36) of each first linear actuator (32) is fixedly connected with the box frame (12), and wherein the second end (42) of each second linear actuator (38) is fixedly connected with the box frame (12).

## Patentansprüche

1. Klauenschneidekasten (10) zur Behandlung eines Beines eines Huftieres, insbesondere einer Kuh, wobei der Klauenschneidekasten (10) umfasst:
• einen Kastenrahmen (12), der mit vier Stützen (14) versehen ist, die sich in vertikaler Richtung von vier Winkelpunkten (16) eines Rechtecks mit zwei langen Seiten (18) und zwei kurzen Seiten (20, 21) erstrecken, wobei der Kastenrahmen (12) einen Tieraufstellraum (22) begrenzt, wobei der Kastenrahmen (12) an einer der kurzen Seiten (20, 21) eine Eintrittsöffnung (24) und an einer anderen der kurzen Seiten (20, 21) eine Ausgangsöffnung (26) aufweist;
• einen Boden (28), der mit dem Kastenrahmen (12) verbunden ist;
• einen mobilen Unterbaurahmen (30); und
• ein Hebesystem, das den Unterbaurahmen (30) mit dem Kastenrahmen (12) verbindet, und das zum vertikalen Verschieben des Kastenrahmens (12) mit dem Boden (28) relativ zum Unterbaurahmen (30) konfiguriert ist, so dass der Boden (28) in eine begehbare Position und in eine höher gelegene Arbeitsposition gebracht werden kann, **dadurch gekennzeichnet, dass** das Hebesystem umfasst:
∘ zwei erste Linearantriebe (32), die vertikal in der Nähe der beiden Winkelpunkte (16) einer ersten der kurzen Seiten (20, 21) angeordnet sind, mit denen ein erstes Ende (34) jedes ersten Linearantriebs (32) mit dem Unterbaurahmen (30) verbunden ist, und wobei ein zweites Ende (36) jedes ersten Linearantriebs (32) mit dem Kastenrahmen (12) verbunden ist, wobei bei jedem ersten Linearantrieb (32) eine dieser Verbindungen eine Scharnierverbindung ist, und
∘ zwei zweite Linearantriebe (38), die vertikal in der Nähe der beiden Winkelpunkte (16) einer zweiten der kurzen Seiten (20, 21) angeordnet sind, mit denen ein erstes Ende (40) jedes zweiten Linearantriebs (38) mit dem Unterbaurahmen (30) verbunden ist, und wobei ein zweites Ende (42) jedes zweiten Linearantriebs (38) mit dem Kastenrahmen (12) verbunden ist, wobei bei jedem zweiten Linearantrieb (38) eine dieser Verbindungen ein Scharnier und eine im Wesentlichen horizontal verschiebbare Verbindung ist.

2. Klauenschneidekasten nach Anspruch 1, wobei jede Scharnierverbindung um eine Scharnierachse schwenkt, die parallel zu den beiden kurzen Seiten (20, 21) ist.

3. Klauenschneidekasten nach Anspruch 1 oder 2, wobei die Scharnier- und im Wesentlichen horizontal verschiebbare Verbindung in einer Richtung im Wesentlichen parallel zu den beiden langen Seiten (18) verschiebbar ist.

4. Klauenschneidekasten nach einem der vorhergehenden Ansprüche, wobei die beiden ersten Linearantriebe (32) in der Nähe der Winkelpunkte (16) einer ersten kurzen Seite (20) angeordnet sind, wobei der Kastenrahmen (12) die Ausgangsöffnung (26) an der ersten kurzen Seite (20) aufweist, und wobei die zwei zweiten Linearantriebe (38) in der Nähe der Winkelpunkte (16) einer zweiten kurzen Seite (21) angeordnet sind, wobei der Kastenrahmen (12) die Eingangsöffnung (24) an der zweiten kurzen Seite (21) aufweist.

5. Klauenschneidekasten nach einem der vorhergehenden Ansprüche, wobei der Unterbaurahmen (30) mit einem Raupenfahrwerk (44) versehen ist.

6. Klauenschneidekasten nach Anspruch 5, wobei sich der Raupenfahrwerk (44) im Wesentlichen über eine Länge des Kastenrahmens (12) und/oder des Unterbaurahmens (30) erstreckt.

7. Klauenschneidekasten nach einem der vorhergehenden Ansprüche, wobei jeder Linearantrieb (32, 38) eine hydraulische Kolben-ZylinderAnordnung umfasst.

8. Klauenschneidekasten nach einem der vorhergehenden Ansprüche, wobei die Eingangsöffnung (24) mit einer Querstange (46) verschließbar ist, die mit dem Kastenrahmen (12) in einer nach oben und unten einstellbaren Weise verbunden ist.

9. Klauenschneidekasten nach einem der vorhergehenden Ansprüche, wobei die Ausgangsöffnung (26) mit zwei verschiebbaren Türen (48) verschließbar ist.

10. Klauenschneidekasten nach Anspruch 9, wobei die beiden Türen (48) mit einem Kopfdurchgang (50) zum Passieren des Kopfes und einem Teil eines Halses des zu behandelnden Tieres versehen sind, der sich in dem Tieraufstellungsraum (22) befindet.

11. Klauenschneidekasten nach einem der vorhergehenden Ansprüche, wobei die horizontal verschiebbare Verbindung der zweiten Linearantriebe (38) einen Gleitblock (54) umfasst, der in einer Führung (52) verschiebbar aufgenommen ist.

12. Klauenschneidekasten nach einem der vorhergehenden Ansprüche, wobei das erste Ende (34) jedes ersten Linearantriebs (32), der mit dem Unterbaurahmen (30) verbunden ist, die Scharnierverbindung ist.

13. Klauenschneidekasten nach einem der vorhergehenden Ansprüche, wobei das erste Ende (40) jedes zweiten Linearantriebs (38), der mit dem Unterbaurahmen (30) verbunden ist, die schwenkbare und verschiebbare Verbindung ist.

14. Klauenschneidekasten nach einem der vorhergehenden Ansprüche, wobei das zweite Ende (36) jedes ersten Linearantriebs (32) mit dem Kastenrahmen (12) fest verbunden ist und wobei das zweite Ende (42) jedes zweiten Linearantriebs (38) fest mit dem Kastenrahmen (12) verbunden ist.

## Revendications

1. Cage de parage (10) pour traiter une patte d'un ongulé, en particulier une vache, la cage de parage (10) comprenant :
• un cadre de cage (12) pourvu de quatre montants (14) qui s'étendent dans une direction verticale à partir de quatre points angulaires (16) d'un rectangle ayant deux grands côtés (18) et deux petits côtés (20, 21), dans lequel le cadre de cage (12) délimite un espace de positionnement d'animal (22), dans lequel le cadre de cage (12), sur l'un des petits côtés (20, 21), comporte une ouverture d'entrée (24) et sur un autre des petits côtés (20, 21), comporte une ouverture de sortie (26) ;
• un plancher (28) qui est connecté au cadre de cage (12) ;
• un châssis de base mobile (30) ; et
• un système de levage qui relie le châssis de base (30) au cadre de cage (12) et qui est configuré pour déplacer verticalement le cadre de cage (12) avec le plancher (28) par rapport au châssis de base (30), de sorte que le plancher (28) peut être mis dans une position d'accès et dans une position de travail, plus haute, **caractérisée en ce que** le système de levage comprend :
° deux premiers actionneurs linéaires (32) placés verticalement à proximité des deux points angulaires (16) d'un premier des petits côtés (20, 21), dans lequel une première extrémité (34) de chaque premier actionneur linéaire (32) est connectée au châssis de base (30) et dans lequel une deuxième extrémité (36) de chaque premier actionneur linéaire (32) est connectée au cadre de cage (12), dans lequel pour chaque premier actionneur linéaire (32), une des ces connexions est une connexion articulée, et
° deux deuxièmes actionneurs linéaires (38) placés verticalement à proximité des deux points angulaires (16) d'un deuxième des petits côtés (20, 21), dans lequel une première extrémité (40) de chaque deuxième actionneur linéaire (38) est connectée au châssis de base (30) et dans lequel une deuxième extrémité (42) de chaque deuxième actionneur linéaire (38) est connectée au cadre de cage (12), dans lequel pour chaque deuxième actionneur linéaire (38), une des ces connexions est une connexion articulée et pouvant coulisser de façon substantiellement horizontale.

2. Cage de parage selon la revendication 1, dans laquelle chaque connexion articulée s'articule autour d'un axe de rotation qui est parallèle aux deux petits côtés (20, 21).

3. Cage de parage selon la revendication 1 ou 2, dans laquelle la connexion articulée et pouvant coulisser de façon substantiellement horizontale peut coulisser dans une direction substantiellement parallèle aux deux grands côtés (18).

4. Cage de parage selon l'une quelconque des revendications précédentes, dans laquelle les deux premiers actionneurs linéaires (32) sont placés à proximité des points angulaires (16) d'un premier petit côté (20), dans laquelle le cadre de cage (12) a l'ouverture de sortie (26) sur le premier petit côté (20), et dans laquelle les deux deuxièmes actionneurs linéaires (38) sont placés à proximité des points angulaires (16) d'un deuxième petit côté (21), dans laquelle le cadre de cage (12) a l'ouverture d'entrée (24) sur le deuxième petit côté (21).

5. Cage de parage selon l'une quelconque des revendications précédentes, dans laquelle le châssis de base (30) est pourvu d'un train de roulement à chenilles (44).

6. Cage de parage selon la revendication 5, dans laquelle le train de roulement à chenilles (44) s'étend substantiellement sur toute une longueur du cadre de cage (12) et/ou du châssis de base (30).

7. Cage de parage selon l'une quelconque des revendications précédentes, dans laquelle chaque actionneur linéaire (32, 38) comprend un ensemble de vérin hydraulique.

8. Cage de parage selon l'une quelconque des revendications précédentes, dans laquelle l'ouverture d'entrée (24) peut être fermée au moyen d'une barre transversale (46) qui est connectée au cadre de cage (12) de manière réglable vers le haut et vers le bas.

9. Cage de parage selon l'une quelconque des revendications précédentes, dans laquelle l'ouverture de sortie (26) peut être fermée au moyen de deux portes mobiles (48).

10. Cage de parage selon la revendication 9, dans laquelle les deux portes (48) sont pourvues d'un passage de tête (50) pour faire passer la tête et une partie du cou de l'animal à traiter qui se trouve dans l'espace de positionnement d'animal (22).

11. Cage de parage selon l'une quelconque des revendications précédentes, dans laquelle la connexion pouvant coulisser de façon horizontale des deuxièmes actionneurs linéaires (38) comprend un bloc coulissant (54) reçu de manière glissante dans un guide (52).

12. Cage de parage selon l'une quelconque des revendications précédentes, dans laquelle la première extrémité (34) de chaque premier actionneur linéaire (32) qui est connectée au châssis de base (30) est la connexion articulée.

13. Cage de parage selon l'une quelconque des revendications précédentes, dans laquelle la première extrémité (40) de chaque deuxième actionneur linéaire (38) qui est connectée au châssis de base (30) est la connexion articulée et qui peut coulisser.

14. Cage de parage selon l'une quelconque des revendications précédentes, dans laquelle la deuxième extrémité (36) de chaque premier actionneur linéaire (32) est connectée de manière fixe au cadre de cage (12), et dans laquelle la deuxième extrémité (42) de chaque deuxième actionneur linéaire (38) est connectée de manière fixe au cadre de cage (12).
